# EUROPEAN PATENT SPECIFICATION

(11) **EP 3 109 777 B1**
(45) Date of publication and mention of the grant of the patent: **20.01.2021**
(21) Application number: 16153066.2
(22) Date of filing: 28.01.2016
(51) Int. Cl.: G06F 16/35

(54) **OBJECT CLASSIFICATION DEVICE AND PROGRAM**
OBJEKTKLASSIFIZIERUNGSVORRICHTUNG UND -PROGRAMM
DISPOSITIF DE CLASSIFICATION D'OBJET ET PROGRAMME

(30) Priority: 24.06.2015 JP 2015126922
(43) Date of publication of application: 28.12.2016
(73) Proprietor: Fuji Xerox Co., Ltd., Minato-ku, Tokyo (JP)
(72) Inventor: SUZUKI, Seiji, Yokohama-shi, Kanagawa (JP); TAKAAI, Motoyuki, Yokohama-shi, Kanagawa (JP); OKAMOTO, Hiroshi, Yokohama-shi, Kanagawa (JP); TOKUNAGA, Nami, Yokohama-shi, Kanagawa (JP); UMEMOTO, Hiroshi, Yokohama-shi, Kanagawa (JP); NAGAMINE, Takeshi, Yokohama-shi, Kanagawa (JP)
(74) Representative: Haseltine Lake Kempner LLP

(56) References cited:
- WO-A1-00/77690
- US-A1- 2003 217 335
- US-A1- 2013 212 111

## Description

### BACKGROUND

### 1. Technical Field

The present invention relates to an object classification device and a program.

### 2 . Related Art

There is a technology in which plural keywords extracted from a document group are visualized in a two-dimensional map. Patent Literature 1 (JP-A-2010-224625) discloses a method of appropriately expressing the relevance between keywords even when a topic is distributed.

WO 00/77690 A1 discloses a method and system for organizing and retrieving information through the use of taxonomies. Documents stored in the organization and retrieval subsystem may be manually or automatically classified into a predetermined number of taxonomies. In operation, an automatic term extractor creates a list of terms that are indicative of the subject matter contained in the documents. A term analysis system assigns the relevant terms to one or more taxonomies, and a suitable algorithm is then used to determine the relatedness between each list of terms and its associated taxonomy. The system then clusters documents for each taxonomy in accordance with the weights ascribed to the terms in the taxonomy's list and a directed acyclic graph (DAG) hierarchical structure is created.

### SUMMARY

However, in the two-dimensional map disclosed in Patent Literature 1, a conceptual connection is not taken into account between adjacent keywords. Thus, if the adjacent keywords have the conceptual connection, it is possible to impart the meaning to the distribution of continuous keywords.

According to the present invention, an object classification device according to claim 1 and a computer program according to claim 10 are provided.

In view of above, an illustrative aspect of exemplary embodiment(s) is to provide an object classification device that classifies objects according to keywords having a conceptual connection.
[1] An aspect of the exemplary embodiment(s) provides an object classification device including: a keyword determining unit that determines keywords for one or plural objects; a keyword ordering unit that orders the plural determined keywords based on a conceptual hierarchical structure which is a structure that hierarchically represents concept of words; and a classifying unit that classifies the objects so as to be associated with the ordered keywords.
[2] It may be the object classification device according to [1], in which the keyword ordering unit orders the keywords in the respective hierarchies in order from a highest hierarchy of the conceptual hierarchical structure in which the plural words are arranged, based on the conceptual hierarchical structure in which a group of words associated with each word, as a subordinate concept of the word, is rearranged based on a relevance of the group of words to plural words arranged in a hierarchy which is one higher than the hierarchy of the group of words.
[3] It may be the object classification device according to [2], in which the keyword ordering unit orders the plural keywords so as to correspond to the arrangement order of the plural keywords in the rearranged conceptual hierarchical structure.
[4] It may be the object classification device according to any one of [1] to [3], in which the keyword determining unit determines a candidate keyword having a highest appearance frequency, as the keyword, among plural candidate keywords which are candidates of the keywords for the one or plural objects.
[5] It may be the object classification device according to [2], in which the keyword determining unit determines a candidate keyword closest to an average position, as the keyword, among plural candidate words which are candidates of the keywords for the one or plural objects, in the conceptual hierarchical structure rearranged based on positions and appearance frequencies of the respective candidate keywords in the conceptual hierarchical structure in which the plural candidate keywords are rearranged.
[6] It may be the object classification device according to [2], in which the keyword determining unit determines a word indicating a common superordinate concept of plural candidate keywords, as the keyword, in the rearranged conceptual hierarchical structure, among the plural candidate keywords which are candidates of the keywords for the one or plural objects.
[7] It may be the object classification device according to any one of [1] to [6], further including: a table displaying unit that displays a two-dimensional table in which the ordered keywords are arranged in one of row and column of a matrix and the objects classified so as to be associated with the keywords are arranged in elements, on a display unit.
[8] It may be the object classification device according to [7], further including: a range designating unit that designates a range including one or more objects in the two-dimensional table in response to an operation of a user, in which the classifying unit classifies objects similar to an object included in the range into any of the keywords, and the table displaying unit displays the two-dimensional table in which the object included in the range and similar objects similar to the object included in the range are arranged in elements, on the display unit.
[9] It may be the object classification device according to [8], in which the classifying unit does not classify the similar objects when the keywords into which the similar objects are classified are far away from the range by a threshold or more.
[10] It may be the object classification device according to any one of [7] to [9], in which in the two-dimensional table, contexts of the object are arranged in the order based on the rearranged conceptual hierarchical structure in the other of row and column of the matrix.
[11] Another aspect of the exemplary embodiment(s) provides a program causing a computer to function as: a keyword determining unit that determines keywords for one or plural objects; a keyword ordering unit that orders the plural determined keywords based on a conceptual hierarchical structure which is a structure that hierarchically represents concept of words; and a classifying unit that classifies the objects so as to be associated with the ordered keywords.

With the configurations of [1] and [11], it is possible to classify the objects according to the keywords having the conceptual connection.

With the configurations of [2] and [3], it is possible to order the keywords with conceptual continuity based on the conceptual hierarchical structure having the conceptual connection in the horizontal direction.

With the configuration of [4], it is possible to classify the object based on the keyword which is representative of the object.

With the configuration of [5], it is possible to select the keyword which is representative of the object from the plural candidates through the addition of the concept thereof.

With the configuration of [6], it is possible to select the keyword including the concept of the plural candidates, as the keyword which is representative of the object.

With the configuration of [7], it is possible to visualize the objects classified according to the keywords having the conceptual connection.

With the configuration of [8], it is possible to re-retrieve the similar objects based on the range designated in the two-dimensional table in which the objects classified according to the keywords having the conceptual connection are visualized.

With the configuration of [9], it is possible to re-retrieve the similar objects on the periphery of the range designated in the two-dimensional table in which the objects classified according to the keywords having the conceptual connection are visualized.

With the configuration of [10], it is possible to display the two-dimensional table in which the keywords having the conceptual connection and the contexts having the conceptual connection are arranged in the matrix.

### BRIEF DESCRIPTION OF THE DRAWINGS

Exemplary embodiment(s) of the present invention will be described in detail based on the following figures, wherein
Fig. 1 is a diagram showing an example of a hardware configuration of an object classification device according to the present embodiment;
Fig. 2 is a functional block diagram showing an example of functions realized by the object classification device according to the present embodiment;
Fig. 3 is a diagram showing an example of a general conceptual hierarchical structure;
Fig. 4 is a schematic diagram showing the general conceptual hierarchical structure;
Fig. 5 shows an example of the conceptual hierarchical structure in which the conceptual ordering is performed in a horizontal direction according to the present embodiment;
Fig. 6 is a diagram showing an example of an object classifying table according to the present embodiment;
Fig. 7 is a flowchart showing an example of a flow of an object classifying process performed by the object classification device according to the present embodiment;
Fig. 8 is a flowchart showing an example of a flow of an object re-retrieval process performed by the object classification device according to the present embodiment;
Fig. 9 is a diagram showing an example of the object classifying table during the re-retrieval process according to the present embodiment; and
Fig. 10 is a diagram showing an example of the object classifying table after the re-retrieval process according to the present embodiment.

### DETAILED DESCRIPTION

Hereinafter, an exemplary embodiment of the present invention will be described with reference to the drawings.

### [Hardware Configuration]

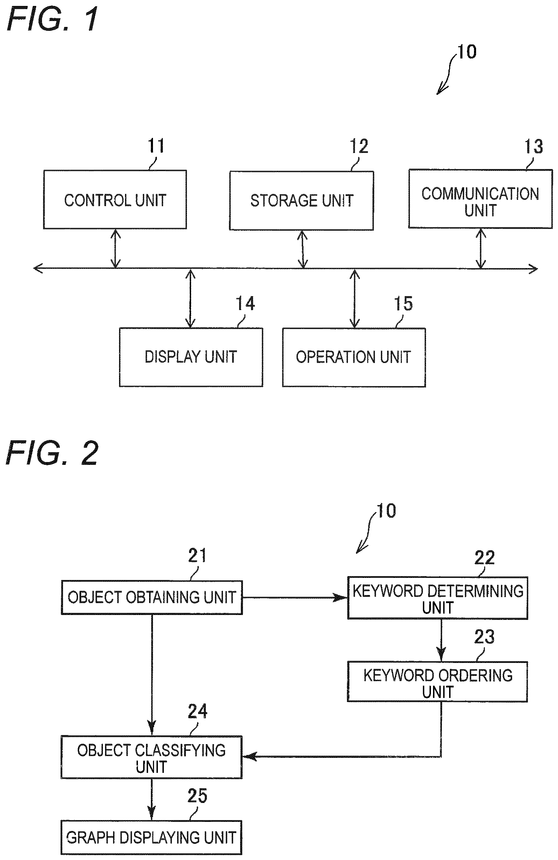

An object classification device 10 according to the present embodiment can be realized as, for example, an information processing device such as a personal computer, and Fig. 1 shows an example of a hardware configuration of the object classification device 10 according to the present embodiment. As shown in Fig. 1, the object classification device according to the present embodiment includes a control unit 11, a storage unit 12, a communication unit 13, a display unit 14, and an operation unit 15.

The control unit 11 includes a program control device such as a CPU, and executes various information processes according to programs stored in the storage unit 12.

The storage unit 12 includes a memory device such as a RAM or a ROM, and a hard disk, and stores programs executed by the control unit 11. The storage unit 12 functions as a work memory of the control unit 11.

The communication unit 13 is a network interface such as a LAN card, and transmits and receives information to and from another information processing device via communication means such as a LAN or a wireless communication network.

The display unit 14 is a display device such as a liquid crystal display, and displays information according to an instruction input from the control unit 11.

The operation unit 15 is a mouse, a keyboard, or a touch panel, and receives the operation of a user to output an operation signal to the control unit 11.

### [Functional Block Diagram]

Fig. 2 is a functional block diagram showing an example of a function realized by the object classification device 10 according to the present embodiment. As shown in Fig. 2, the object classification device 10 according to the present embodiment includes an object obtaining unit 21, a keyword determining unit 22, a keyword ordering unit 23, an object classifying unit 24, and a graph displaying unit 25. These functions are realized by executing the programs stored in the storage unit 12 by the control unit 11. The programs may be provided while being stored in, for example, various computer-readable information storage media such as optical disks, or may be provided to the object classification device 10 via a communication network such as the Internet.

The object obtaining unit 21 obtains an object from a storage device such as a hard disk that stores object data. Here, the obtained object may be an electronic document, a figure, or a table. The object obtaining unit 21 may obtain an object by downloading the object via a network, or may obtain an object by performing OCR on an object image obtained by a scanner.

In the present embodiment, it is assumed that the object obtained by the object obtaining unit 21 includes an object (referred to as a retrieval object) retrieved under a specific condition, and an object (referred to as a similar object) similar to the retrieval object. The retrieval object is, for example, an object retrieved based on a retrieval condition input by a user, and in the present embodiment, the object obtaining unit 21 obtains one or more objects belonging to the retrieval condition input by the user, as the retrieval object. The similar object is an object similar to the retrieval object, and in the present embodiment, the object obtaining unit 21 obtains one or more objects similar to the retrieval object for each retrieval object, as the similar object. For example, the object obtaining unit 21 calculates the degree of similarity between the retrieval object and another object based on an element such as a word included in the retrieval object, and obtains an object of which the calculated degree of similarity exceeds a predetermined degree of similarity, as the similar object. Here, the degree of similarity may be changeably set. If the degree of similarity is set to be high, a limited similar object which is more similar to the retrieval object is obtained, and if the degree of similarity is set to be low, a broad similar object which is similar to the retrieval object to some extent is obtained. In the present embodiment, it is assumed that one or more retrieval objects and one or more similar objects obtained by the object obtaining unit 21 are divided into plural object groups. For example, it assumed that a set of one retrieval object and one or more similar objects similar to the retrieval object are described as one object group.

The keyword determining unit 22 determines one keyword which is representative of the object group obtained by the object obtaining unit 21. Here, it is assumed that the keyword determining unit 22 determines one keyword which is representative of the object group for each of the plural object groups. Specifically, the keyword determining unit 22 may extract a word having a high appearance frequency from the object included in the obtained object group to determine the extracted word as a keyword, or may further add the structure of an object or the importance of syntax to the extracted word to determine a keyword.

When the keyword determining unit 22 determines the keyword by the aforementioned method, plural words having the high appearance frequency may be extracted from the object included in the object group in some cases. When the plural words (referred to as candidate keywords) which are candidates of the keyword are extracted, it is assumed that the keyword determining unit 22 determines one keyword which is representative of the object group based on the plural candidate keywords and a conceptual hierarchical structure. A process of determining the keyword which is representative of the object group by the keyword determining unit 22 will be described below.

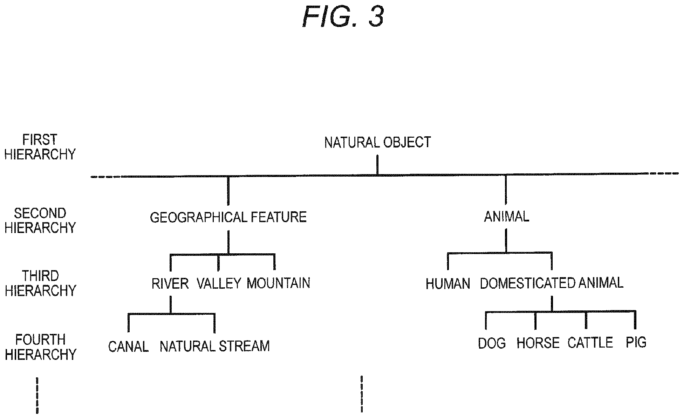

Initially, the conceptual hierarchical structure is a structure that hierarchically represents the concept of words. Fig. 3 is a diagram showing an example of a general conceptual hierarchical structure. As shown in Fig. 3, it is assumed that in the general conceptual hierarchical structure, "natural object" is arranged in a first hierarchy in which a highest-hierarchy concept word is arranged. In this manner, for example, "geographical feature" and "animal" are associated with a second hierarchy, as the subordinate concept of the "natural object". For example, "river", "valley" and "mountain" which are the subordinate concept of the "geographical feature" and "human" and "domesticated animal" which are the subordinate concept of the "animal" are associated with a third hierarchy. As stated above, in the general conceptual hierarchical structure, the highest-hierarchy concept word is arranged in the first hierarchy, and the subordinate concept words are arranged as the hierarchy becomes lower. The conceptual hierarchical structure may be generated using a multipurpose dictionary, or the conceptual hierarchical structure may be generated from, for example, the word included in the object stored in the storage device.

In the general conceptual hierarchical structure shown in Fig. 3, the association of the words between the hierarchies means the connection between the superordinate concept and the subordinate concept, but the arrangement order of a group of words associated as the subordinate concept of the same word within the hierarchy does not take into account the conceptual connection. For example, "dog", "horse", "cattle" and "pig" which are arranged in a fourth hierarchy of the conceptual hierarchical structure shown in Fig. 3 are a group of words associated with the "domesticated animal" which is the superordinate concept word. However, the arrangement order of the group of words within the fourth hierarchy, that is, the arrangement order in the horizontal direction does not take into account the conceptual connection.

Thus, in the present embodiment, it is assumed that the arrangement order in the horizontal direction in the conceptual hierarchical structure has conceptual continuity by conceptually ordering the words within the same hierarchy of the conceptual hierarchical structure.

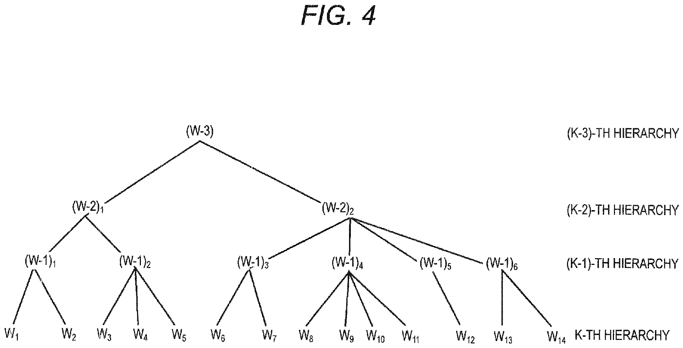

The ordering of words in the horizontal direction in the conceptual hierarchical structure will be described with reference to a schematic diagram showing a general conceptual hierarchical structure shown in Fig. 4. The conceptual hierarchical structure shown in Fig. 4 is a general conceptual hierarchical structure in which plural words are arranged. The highest-superordinate concept word (hereinafter, referred to as a word (W-3)) is arranged in the highest hierarchy (hereinafter, referred to as a (k-3)-th hierarchy), and the subordinate concept words are arranged as the hierarchy becomes lower. The conceptual hierarchical structure shown in Fig. 4 represents to a k-th hierarchy from the (k-3)-th hierarchy, but may represent a (k+1)-th hierarchy and subsequent hierarchies. Here, a case where a group of words Wₙ = {W₈, W₉, W₁₀, W₁₁} of the k-th hierarchy is ordered will be described. Specifically, the relevance of the respective words Wₙ = {Ws, W₉, W₁₀, W₁₁} to the respective words (W-1)ₘ = {(W-1)₃, (W-1)₄, (W-1)₅, (W-1)₆} which are arranged in a hierarchy (here, the (k-1)-th hierarchy) one higher than the hierarchy in which the words Wₙ are arranged is evaluated, and the words are ordered in the horizontal direction such that the words with high relevance are positioned to be closer to one another. That is, the respective words are rearranged such that the words with high relevance to the word (W-1)₃ are arranged on a left-hand side close to the word (W-1)₃, and the words with high relevance to the word (W-1)₅ or the word (W-1)₆ are arranged on a right-hand side close to the word (W-1)₅ or the word (W-1)₆. It is assumed that the word (W-1)ₚ (here, the word (W-1)₄) associated as the superordinate concept of the word Wₙ is excluded from a relevance evaluating target.

For example, in the method of evaluating the relevance of the words (W-1)ₘ to the words Wₙ, it is possible to evaluate the relevance by calculating the degree of similarity between an object group including the words Wₙ of the objects stored in the storage device and an object group including a group of words associated as the subordinate concepts of the words (W-1)ₘ of the objects stored in the storage device. In this case, when a feature vector of the object group including the words Wₙ is expressed as dₙ, and a feature vector of the object group including a group of words associated as the subordinate concepts of the word (W-1)ₘ is expressed as dₘ, an inner product of the feature vector dₙ and the feature vector dₘ is calculated as the degree of similarity. That is, the relevance of the words Wₙ to the word (W-1)ₘ is evaluated using a degree of similarity S(n, m) = dₙ·dₘ, and it is evaluated that the higher the degree of similarity S(n, m), the higher the relevance and the lower the degree of similarity S(n, m), the lower the relevance. The feature vector dₙ and the feature vector dₘ may be the sum of the feature vectors of the respective objects included in the object group. Here, when keywords Ki (i = 1, 2, ..., and t) having the number of elements t are extracted from the object group having the number of objects N, the feature vector of the objects is expressed as a t-dimensional vector (0, 1, 1, ..., 0)^{t} by expressing a case where Ki is included in the respective objects Ej (j = 1, 2, 3, ..., and N) included in the object group as "1" and a case where Ki is not included in the respective objects as "0".

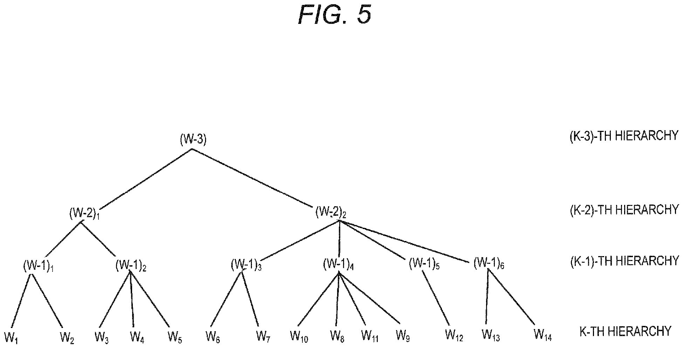

The words are ordered by rearranging the respective words of the words Wₙ = {W₈, W₉, W₁₀, W₁₁} such that the word Wₙ is positioned closely to the word (W-1)ₘ evaluated as having high relevance to the word Wₙ depending on the degree of similarity S(n, m) calculated as stated above and the position in the conceptual hierarchical structure. By using such a method, it is possible to construct the conceptual hierarchical structure with conceptual continuity in the arrangement order in the horizontal direction by ordering the words through the rearrangement of the words in the respective hierarchies in the order from the highest hierarchy. Fig. 5 shows an example of the conceptual hierarchical structure in which the words are conceptually ordered in the horizontal direction according to the present embodiment. In Fig. 5, the respective words of the group of words Wₙ = {W₈, W₉, W₁₀, W₁₁} of the K-th hierarchy in the general conceptual hierarchical structure shown in Fig. 4 are rearranged according to the conceptual ordering. It is assumed that other words shown in Fig. 5 are also arranged in the horizontal direction according to the conceptual ordering by rearranging the words in the respective hierarchies in the order of the highest hierarchy. It is possible to express the words of the conceptual hierarchical structure on a coordinate plane by representing the conceptual continuity in the horizontal direction as a distance. Thus, it is possible to express conceptual proximity between the words as well as the conceptual ordering of the words.

As the method of calculating the degree of similarity S(n, m), the degree of similarity may be calculated by adding the relevance of the word (W-1)ₘ to the word (W-1)ₚ associated as the superordinate concept of the word Wₙ to the word. For example, when the relevance of the word (W-1)ₘ to the word (W-1)ₚ is expressed as Rm, it is assumed that the degree of similarity S(n, m) is calculated as a degree of similarity S(n, m) = Rₘ·dₙ·dₘ. Here, the relevance Rm may be obtained by quantifying the conceptual relevance of the word (W-1)ₘ to the word (W-1)ₚ. For example, the relevance Rm may be the number of steps in the horizontal direction in the conceptual hierarchical structure from the word (W-1)ₚ to the word (W-1)ₘ. That is, in Fig. 4, one step is from the word (W-1)ₚ to the word (W-1)₃ and the word (W-1)₅ and two steps are from the word (W-1)ₚ to the word (W-1)₆, and thus, the conceptual relevance of the word (W-1)ₚ to the word (W-1)ₘ is quantified. Here, since the words are ordered in the order of the higher hierarchy, the words are already arranged in the horizontal direction according to the conceptual ordering in the (k-1)-th hierarchy. Accordingly, it can be said in the (k-1)-th hierarchy that the closer the position in the horizontal direction, the higher the relevance and the farther the position in the horizontal direction, the lower the relevance. By using such a relationship between the position and the relevance, it is possible to easily express the conceptual relevance of the word (W-1)ₘ to the word (W-1)ₚ as the number of steps from the word (W-1)ₚ to the word (W-1)ₘ. If the conceptual continuity in the horizontal direction is represented as the distance, it is possible to quantify the conceptual relevance Rm of the word (W-1)ₚ to the word (W-1)ₘ by using the distance. It is possible to more specifically express the relevance between the words by representing the conceptual relevance of the word (W-1)ₚ to the word (W-1)ₘ as the distance.

An example of a method of determining one keyword which is representative of the object group by the keyword determining unit 22 based on the conceptual hierarchical structure in which the words are conceptually ordered in the horizontal direction will be described. For example, in the conceptual hierarchical structure in which the words are conceptually ordered in the horizontal direction as shown in Fig. 5, it is assumed that plural candidate keywords are respectively positioned in "W₁", "W₆", "W₇" and "W₁₀". In the conceptual hierarchical structure shown in Fig. 5, since the words are conceptually ordered in the horizontal direction according to the conceptual ordering, a conceptual distribution trend of the candidate keywords is exhibited by the positions of the plural candidate keywords (here, "W₁", "W₆", "W₇", and "W₁₀") in the horizontal direction and the appearance frequencies of the respective candidate keywords. That is, the keyword which is representative of the object group can be a representative value of the distribution of the candidate keywords in the conceptual hierarchical structure. Thus, the keyword determining unit 22 calculates the weighted mean of the positions in the conceptual hierarchical structure using the appearance frequencies of the respective candidate keywords as weights. The keyword determining unit 22 determines a candidate keyword closest to the calculated weighted mean position, as a keyword which is representative of the object group.

Another method of determining one keyword which is representative of the object group by the keyword determining unit 22 based on the conceptual hierarchical structure in which the words are conceptually ordered in the horizontal direction will be described. For example, in the conceptual hierarchical structure in which the words are conceptually ordered in the horizontal direction shown in Fig. 5, it is assumed that the plural candidate keywords are positioned in "W₈", "W₁₁" and "W₁₂". In this case, the keyword determining unit 22 determines the word positioned in "(W-2)₂" which is the common superordinate-concept word of the plural candidate keywords "W₈", "W₁₁" and "W₁₂", as a keyword which is representative of the object group. When this method is used, since there is a possibility that the keywords which are representative of the respective object groups will be the same in the plural object groups, the hierarchies of the conceptual hierarchical structure need to be constructed in sufficient depth.

The keyword ordering unit 23 orders the keywords determined in the plural object groups by the keyword determining unit 22 based on the conceptual hierarchical structure. Specifically, the keyword ordering unit 23 orders the keywords which are representative of the respective object groups based on the positions in the conceptual hierarchical structure in which the words are arranged in the horizontal direction. The keyword ordering unit 23 orders the keywords by obtaining the positions of the respective keywords in the conceptual hierarchical structure in which the words are conceptually ordered in the horizontal direction according to the conceptual ordering and associating the positions of the keywords with the arrangement order in the horizontal direction, and can order the respective keywords in the order of having the conceptual continuity.

The object classifying unit 24 classifies the object obtained by the object obtaining unit 21 so as to be associated with any of the keywords determined by the keyword determining unit 22.

The graph displaying unit 25 arranges the keywords ordered by the keyword ordering unit 23 in any positions of a matrix in the order thereof, and displays a two-dimensional table in which the objects classified so as to be associated with the respective keywords are arranged as elements on the display unit 14. Although it has been described in the present embodiment that the graph displaying unit 25 displays the two-dimensional table on the display unit 14, the present invention is not limited to this example. For example, a coordinate plane or a three-dimensional table may be displayed.

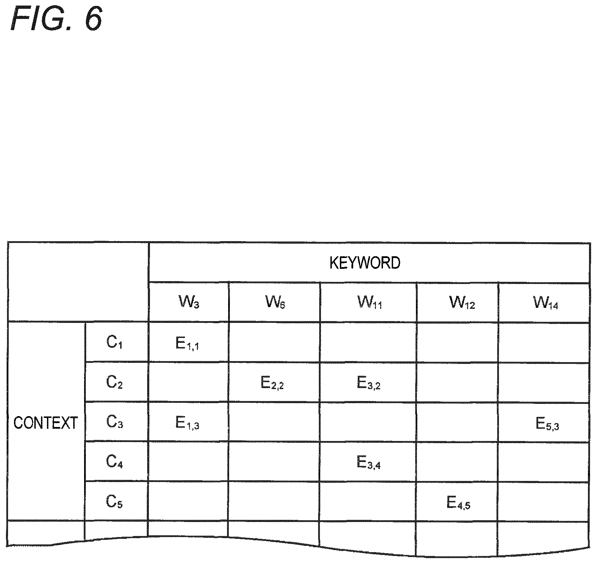

Fig. 6 is a diagram showing an example of an object classifying table according to the present embodiment. As shown in Fig. 6, the object classifying table according to the present embodiment is a two-dimensional table in which keywords (here, W₃, W₆, W₁₁, W₁₂ and W₁₄) are arranged in a row direction and contexts (here, C₁, C₂, C₃, C₄, and C₅) are arranged in a column direction, and the objects corresponding to the respective elements of the object classifying table are arranged. The conceptual continuity is exhibited in the arrangement order in the row direction of the object classifying table by arranging the keywords in the row direction in the order ordered by the keyword ordering unit 23. Thus, it is possible to regard a set of elements included in plural continuous rows as a set in which elements are conceptually connected. The context arranged in the column direction is information which is different from the keyword and classifies the object, and information indicating the background of the object, such as the author or creation date of the object. Similarly to the keywords, the contexts may be conceptually ordered in the column direction. Accordingly, it is possible to regard the set of elements included in the plural continuous columns as the set in which elements are conceptually connected. If both the rows and columns are conceptually ordered, it is possible to regard a set of elements included in a range including plural rows and plural columns as the set in which elements are conceptually connected.

### [Object Classifying Process]

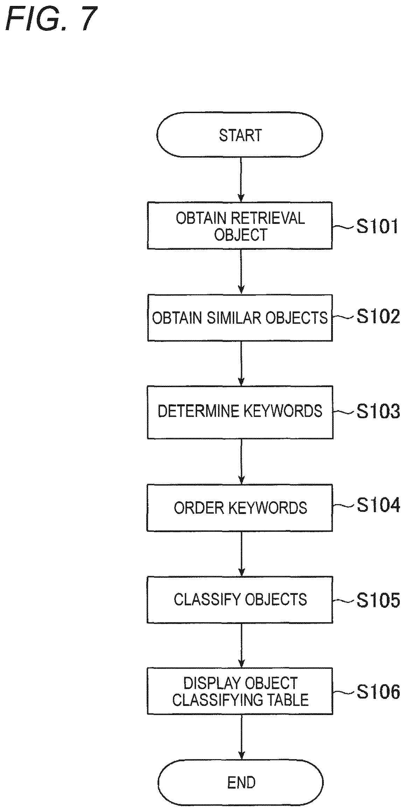

Here, an example of a flow of an object classifying process performed by the object classification device according to the present embodiment will be described with reference to a flowchart shown in Fig. 7.

Initially, when the user inputs the retrieval condition, the object obtaining unit 21 obtains the retrieval object retrieved based on the input retrieval condition (S101). Here, it is assumed that the object obtaining unit 21 obtains plural retrieval objects retrieved based on the input retrieval condition.

The object obtaining unit 21 obtains the similar object similar to the retrieval object for each of the plural retrieval objects obtained in process S101 (S102). Here, it is assumed that the object obtaining unit 21 obtains one or more similar objects for each retrieval object depending on a predetermined degree of similarity. It is assumed that a set of one retrieval object and similar objects similar to the retrieval object is one object group.

The keyword determining unit 22 determines a keyword which is representative of the object group based on the word included in the objects (the retrieval object and the similar objects) of the object group for each object group (S103).

The keyword ordering unit 23 orders keywords determined for each object group by the keyword determining unit 22 based on the conceptual hierarchical structure (S104).

The object classifying unit 24 classifies the respective objects included in the object group obtained by the object obtaining unit 21 so as to be associated with any keywords (S105).

The graph displaying unit 25 displays the object classifying table in which the keywords ordered by the keyword ordering unit 23 are arranged in any positions of the matrix in the order thereof and the objects classified by the object classifying unit 24 are arranged in the respective elements on the display unit 14 (S106), and ends the object classifying process.

### [Re-retrieval Process using Object Classifying Table]

An object re-retrieval process performed using the object classifying table will be described. It has been described in the object classifying table shown in Fig. 6 that the object group included in any range of the object classifying table can be regarded as one set in which elements are conceptually connected. As stated above, when any range of the object classifying table is regarded as one set, it is possible to re-retrieve another object related to this set. For example, it is possible to re-retrieve another object related to the keyword by designating a range including one or more objects classified in the object classifying table and re-retrieving another object similar to the object included in this range or by designating any of keywords represented in the object classifying table and re-retrieving another object related to the keyword. Here, since the re-retrieved object is an object similar to the object included in the designated range, it is easy to classify the re-retrieved object as the periphery of the designated range. That is, the user can designate a desired range of the object classifying table to obtain the object positioned on the periphery of the designated range.

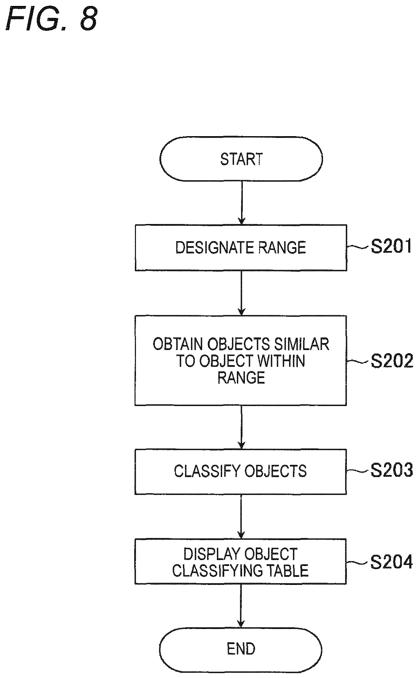

Here, an example of a flow of the object re-retrieval process performed by the object classifying device according to the present embodiment will be described with reference to a flowchart shown in Fig. 8.

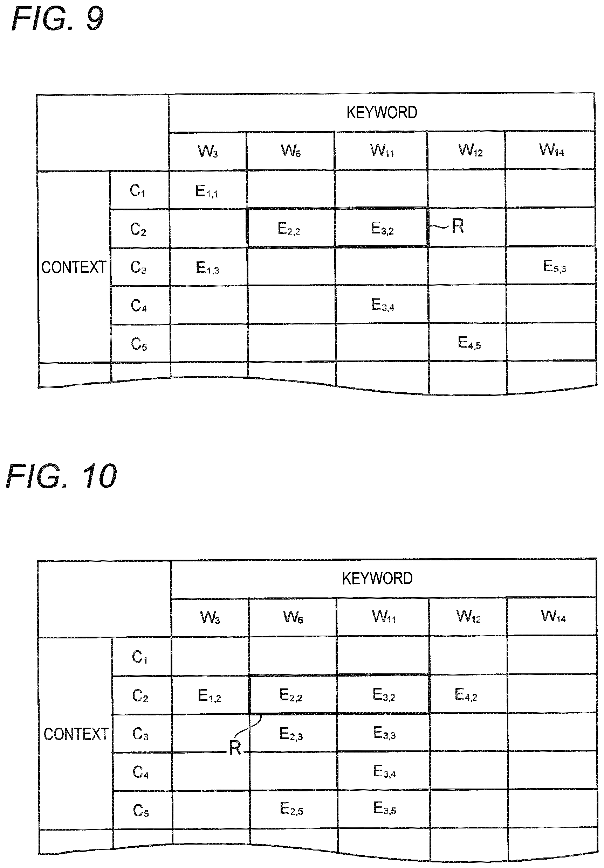

Initially, a range including one or more objects is designated from the object classifying table in response to a mouse operation of the user (S201). Here, the user may select a desired range of the object classifying table, and thus, the range may be designated. Alternatively, the user may select keywords, and thus, rows of the selected keywords may be designated as the range. Fig. 9 is a diagram showing an example of an object classifying table during the re-retrieval process according to the present embodiment. Fig. 9 shows a case where the user designates a range R including an object E_{2,2} and an object E_{3,2} by using the object classifying table shown in Fig. 6.

The object obtaining unit 21 obtains the similar objects similar to the object for each object included in the range designated in process S201 (S202). Specifically, the object obtaining unit 21 obtains the similar objects similar to the object E_{2,2} included in the range R designated in Fig. 9. The object obtaining unit 21 obtains the similar objects similar to the object E_{3,2} included in the range R. Here, it is assumed that as the degree of similarity for obtaining the similar objects in the object obtaining unit 21, a degree of similarity different from a predetermined degree of similarity for obtaining the similar objects in process S102 of the object classifying process is set. Specifically, the degree of similarity in the re-retrieval process is set to be lower than the predetermined degree of similarity in the object classifying process. Here, it is possible to obtain more similar objects than those in the object classifying process on the periphery of the range R by decreasing the degree of similarity. That is, it is easy to classify the objects into empty elements on the periphery of the range R in the object classifying table of Fig. 9.

The object classifying unit 24 classifies the similar objects obtained in process S202 so as to be associated with any keywords displayed in the object classifying table (S203).

The graph displaying unit 25 displays the object classifying table in which the object included in the range designated in process S101 and the similar objects obtained in process S202 are arranged on the display unit 14 (S204).

Fig. 10 is a diagram showing an example of an object classifying table after the re-retrieval process according to the present embodiment. As shown in Fig. 10, the re-retrieved objects (here, E_{1,2}, E_{2,3}, E_{2,5}, E_{3,3}, E_{3,4}, E_{3,5} and E_{4,2}) are displayed in the corresponding elements, and are particularly displayed by being intensively classified on the periphery of the range R. Thus, the user can obtain the object close to the concept indicated by the designated range R.

Here, when the object obtaining unit 21 obtains the similar objects by decreasing the degree of similarity in process S202, there is a possibility that the similar objects to be classified in positions far away from the range R will be obtained. For example, the objects which are similar to the object included in the range R but are not associated with the keyword corresponding to the range R may be obtained in some cases. In this case, the obtained objects are classified so as to be associated with the keyword far away from the range R such as a keyword W₁₄. Basically, it is not preferable that a user who wants to retrieve the object on the periphery of the range R obtains the object classified in the position far away from the range R. Thus, it is assumed that the object classifying unit 24 does not classify the similar objects associated with the keyword far away from the designated range by a predetermined threshold or more. Here, the predetermined threshold may be determined based on the distance depending on the conceptual continuity of the keyword. The graph displaying unit 25 may not display the object classified into the keyword in the position far away from the designated range by the predetermined threshold or more. Accordingly, it is possible to display the object desired by the user through the re-retrieving in the object classifying table.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

## Claims

1. An object classification device (10) comprising:
a keyword determining unit (22) that determines keywords for one or plural objects;
a keyword ordering unit (23) that orders the plural determined keywords based on a conceptual hierarchical structure which is a structure that hierarchically represents concepts of words; and
a classifying unit (24) that classifies the objects so as to be associated with the ordered keywords and creates a two-dimensional object classifying table in which keywords are arranged in a row direction and contexts are arranged in a column direction, and the objects corresponding to the respective elements of the object classifying table are arranged,
wherein the object classification device (10) is adapted to receive a retrieval condition from a user and to retrieve plural retrieval objects based on the input retrieval condition, wherein a range (R) of the two-dimensional object classifying table is identified based on the input retrieval condition, and the objects corresponding to the identified range (R) are selected as retrieval objects, and
wherein the keyword ordering (23) unit orders the keywords in the respective hierarchies in order from a highest hierarchy of the conceptual hierarchical structure in which the plural words are arranged, based on the conceptual hierarchical structure in which a group of words associated with each word, as a subordinate concept of the word, is rearranged based on a relevance of the group of words to plural words arranged in a hierarchy which is one higher than the hierarchy of the group of words.

2. The object classification device (10) according to claim 1,
wherein the keyword ordering unit (23) orders the plural keywords so as to correspond to the arrangement order of the plural keywords in the rearranged conceptual hierarchical structure.

3. The object classification device (10) according to any one of claims 1 or 2,
wherein the keyword determining unit (22) determines a candidate keyword having a highest appearance frequency, as the keyword, among plural candidate keywords which are candidates of the keywords for the one or plural objects.

4. The object classification device (10) according to claim 1,
wherein the keyword determining unit (22) determines a candidate keyword closest to an average position, as the keyword, among plural candidate words which are candidates of the keywords for the one or plural objects, in the conceptual hierarchical structure rearranged based on positions and appearance frequencies of the respective candidate keywords in the conceptual hierarchical structure in which the plural candidate keywords are rearranged.

5. The object classification device (10) according to claim 1,
wherein the keyword determining unit (22) determines a word indicating a common superordinate concept of plural candidate keywords, as the keyword, in the rearranged conceptual hierarchical structure, among the plural candidate keywords which are candidates of the keywords for the one or plural objects.

6. The object classification device (10) according to any one of claims 1 to 5, further comprising:
a table displaying unit (25) that displays the two-dimensional object classifying table in which the ordered keywords are arranged in one of row and column of a matrix and the objects classified so as to be associated with the keywords are arranged in elements, on a display unit.

7. The object classification device (10) according to claim 6, further comprising:
a range designating unit that designates a range (R) including one or more objects in the two-dimensional object classifying table in response to an operation of a user,
wherein the classifying unit (24) classifies objects similar to an object included in the range into any of the keywords, and
the table displaying unit (25) displays the two-dimensional object classifying table in which the object included in the range (R) and similar objects similar to the object included in the range (R) are arranged in elements, on the display unit (25).

8. The object classification device (10) according to claim 7,
wherein the classifying unit (24) does not classify the similar objects when the keywords into which the similar objects are classified are far away from the range (R) by a threshold or more.

9. The object classification device (10) according to any one of claims 6 to 8,
wherein in the two-dimensional object classifying table, contexts of the object are arranged in the order based on the rearranged conceptual hierarchical structure in the other of row and column of the matrix.

10. A program causing a computer to function as:
a keyword determining unit (22) that determines keywords for one or plural objects;
a keyword ordering unit (23) that orders the plural determined keywords based on a conceptual hierarchical structure which is a structure that hierarchically represents concept of words; and
a classifying unit (24) that classifies the objects so as to be associated with the ordered keywords and creates a two-dimensional object classifying table in which keywords are arranged in a row direction and contexts are arranged in a column direction, and the objects corresponding to the respective elements of the object classifying table are arranged,
wherein the program further causes the computer to receive a retrieval condition from a user and to retrieve plural retrieval objects based on the input retrieval condition, wherein a range (R) of the two-dimensional object classifying table is identified based on the input retrieval condition, and the objects corresponding to the identified range (R) are selected as retrieval objects, and
wherein the keyword ordering (23) unit orders the keywords in the respective hierarchies in order from a highest hierarchy of the conceptual hierarchical structure in which the plural words are arranged, based on the conceptual hierarchical structure in which a group of words associated with each word, as a subordinate concept of the word, is rearranged based on a relevance of the group of words to plural words arranged in a hierarchy which is one higher than the hierarchy of the group of words.

## Patentansprüche

1. Objektklassifizierungsvorrichtung (10), umfassend:
eine Schlüsselwortbestimmungseinheit (22), die Schlüsselwörter für eines oder mehrere Objekte bestimmt;
eine Schlüsselwort-Ordnungseinheit (23), die die mehreren bestimmten Schlüsselwörter basierend auf einer konzeptuellen hierarchischen Struktur ordnet, die eine Struktur ist, die Konzepte von Wörtern hierarchisch darstellt; und
eine Klassifizierungseinheit (24), die die Objekte so klassifiziert, dass sie den geordneten Schlüsselwörtern zugeordnet sind, und eine zweidimensionale Objektklassifizierungstabelle erzeugt, in der Schlüsselwörter in Zeilenrichtung angeordnet sind und Kontexte in Spaltenrichtung angeordnet sind, und die Objekte entsprechend ihren jeweiligen Elementen der Objektklassifizierungstabelle angeordnet sind,
wobei die Objektklassifizierungsvorrichtung (10) dazu geeignet ist, eine Abrufbedingung von einem Benutzer zu empfangen und mehrere Abrufobjekte basierend auf der eingegebenen Abrufbedingung abzurufen, wobei ein Bereich (R) der zweidimensionalen Objektklassifizierungstabelle basierend auf der eingegebenen Abrufbedingung identifiziert wird und die Objekte entsprechend dem identifizierten Bereich (R) als Abrufobjekte ausgewählt werden, und
wobei die Schlüsselwort-Ordnungseinheit (23) die Schlüsselwörter in den jeweiligen Hierarchien in einer Reihenfolge von einer höchsten Hierarchie der konzeptuellen hierarchischen Struktur, in der die mehreren Wörter angeordnet sind, ordnet, basierend auf der konzeptuellen hierarchischen Struktur, in der eine Wortgruppe, die jedem Wort als untergeordnetes Konzept des Wortes zugeordnet ist, basierend auf einer Relevanz der Wortgruppe für mehrere Wörter, die in einer Hierarchie angeordnet sind, die um eins höher ist als die Hierarchie der Wortgruppe, neu angeordnet ist.

2. Objektklassifizierungsvorrichtung (10) nach Anspruch 1,
wobei die Schlüsselwortordnungseinheit (23) die mehreren Schlüsselwörter so anordnet, dass sie der Anordnungsreihenfolge der mehreren Schlüsselwörter in der neu angeordneten konzeptuellen hierarchischen Struktur entsprechen.

3. Objektklassifizierungsvorrichtung (10) nach einem der Ansprüche 1 oder 2,
wobei die Schlüsselwortbestimmungseinheit (22) ein Kandidatenschlüsselwort mit einer höchsten Auftrittshäufigkeit als das Schlüsselwort bestimmt, unter mehreren Kandidatenschlüsselwörtern, die Kandidaten der Schlüsselwörter für das eine oder die mehreren Objekte sind.

4. Objektklassifizierungsvorrichtung (10) nach Anspruch 1,
wobei die Schlüsselwortbestimmungseinheit (22) ein Kandidatenschlüsselwort, das einer Durchschnittsposition am nächsten liegt, als das Schlüsselwort bestimmt, unter mehreren Kandidatenwörtern, die Kandidaten der Schlüsselwörter für das eine oder die mehreren Objekte sind, in der konzeptionellen hierarchischen Struktur, die basierend auf Positionen und Auftrittshäufigkeiten der jeweiligen Kandidatenschlüsselwörter in der konzeptionellen hierarchischen Struktur, in der die mehreren Kandidatenschlüsselwörter neu angeordnet sind, neu angeordnet ist.

5. Objektklassifizierungsvorrichtung (10) nach Anspruch 1,
wobei die Schlüsselwortbestimmungseinheit (22) ein Wort, das ein gemeinsames übergeordnetes Konzept von mehreren Kandidatenschlüsselwörtern angibt, als Schlüsselwort bestimmt, in der neu angeordneten konzeptuellen hierarchischen Struktur, unter den mehreren Kandidatenschlüsselwörtern, die Kandidaten für die Schlüsselwörter für das eine oder die mehreren Objekte sind.

6. Objektklassifizierungsvorrichtung (10) nach einem der Ansprüche 1 bis 5, ferner umfassend:
eine Tabellenanzeigeeinheit (25), die die zweidimensionale Objektklassifizierungstabelle, in der die geordneten Schlüsselwörter in einer von Zeile und Spalte einer Matrix angeordnet sind, und die Objekte, die klassifiziert sind, so dass sie den Schlüsselwörtern zugeordnet sind, in Elementen angeordnet sind, auf einer Anzeigeeinheit anzeigt.

7. Objektklassifizierungsvorrichtung (10) nach Anspruch 6, ferner umfassend:
eine Bereichsbezeichnungseinheit, die einen Bereich (R) bezeichnet, der eines oder mehrere Objekte in der zweidimensionalen Objektklassifizierungstabelle aufweist, als Reaktion auf eine Operation eines Benutzers, wobei die Klassifizierungseinheit (24) Objekte, die einem in dem Bereich enthaltenen Objekt ähnlich sind, in eines der Schlüsselwörter klassifiziert, und
die Tabellenanzeigeeinheit (25), die die zweidimensionale Objektklassifizierungstabelle, in der das in dem Bereich (R) enthaltene Objekt und ähnliche Objekte, die dem in dem Bereich (R) enthaltenen Objekt ähnlich sind, in Elementen angeordnet sind, auf der Anzeigeeinheit (25) anzeigt.

8. Objektklassifizierungsvorrichtung (10) nach Anspruch 7,
wobei die Klassifizierungseinheit (24) die ähnlichen Objekte nicht klassifiziert, wenn die Schlüsselwörter, in die die ähnlichen Objekte klassifiziert sind, einen Schwellenwert oder weiter von dem Bereich (R) entfernt sind.

9. Objektklassifizierungsvorrichtung (10) nach einem der Ansprüche 6 bis 8,
wobei in der zweidimensionalen Objektklassifizierungstabelle Kontexte des Objekts in der Reihenfolge, die auf der neu angeordneten konzeptuellen hierarchischen Struktur basiert, in der anderen von Zeile und Spalte der Matrix angeordnet sind.

10. Programm, das bewirkt, dass ein Computer funktioniert als:
eine Schlüsselwortbestimmungseinheit (22), die Schlüsselwörter für eines oder mehrere Objekte bestimmt;
eine Schlüsselwort-Ordnungseinheit (23), die die mehreren bestimmten Schlüsselwörter basierend auf einer konzeptuellen hierarchischen Struktur ordnet, die eine Struktur ist, die Konzepte von Wörtern hierarchisch darstellt; und
eine Klassifizierungseinheit (24), die die Objekte so klassifiziert, dass sie den geordneten Schlüsselwörtern zugeordnet sind, und eine zweidimensionale Objektklassifizierungstabelle erzeugt, in der Schlüsselwörter in Zeilenrichtung angeordnet sind und Kontexte in Spaltenrichtung angeordnet sind, und die Objekte entsprechend ihren jeweiligen Elementen der Objektklassifizierungstabelle angeordnet sind,
wobei die Objektklassifizierungsvorrichtung dazu geeignet ist, eine Abrufbedingung von einem Benutzer zu empfangen und mehrere Abrufobjekte basierend auf der eingegebenen Abrufbedingung abzurufen, wobei ein Bereich (R) der zweidimensionalen Objektklassifizierungstabelle basierend auf der eingegebenen Abrufbedingung identifiziert wird und die Objekte entsprechend dem identifizierten Bereich (R) als Abrufobjekte ausgewählt werden, und
wobei die Schlüsselwort-Ordnungseinheit (23) die Schlüsselwörter in den jeweiligen Hierarchien in einer Reihenfolge von einer höchsten Hierarchie der konzeptuellen hierarchischen Struktur, in der die mehreren Wörter angeordnet sind, ordnet, basierend auf der konzeptuellen hierarchischen Struktur, in der eine Wortgruppe, die jedem Wort als untergeordnetes Konzept des Wortes zugeordnet ist, basierend auf einer Relevanz der Wortgruppe für mehrere Wörter, die in einer Hierarchie angeordnet sind, die um eins höher ist als die Hierarchie der Wortgruppe, neu angeordnet ist.

## Revendications

1. Dispositif de classification d'objet (10) comprenant :
une unité de détermination de mot-clé (22) qui détermine des mots-clés pour un ou plusieurs objets ;
une unité d'ordonnancement de mots-clés (23) qui ordonne les plusieurs mots-clés déterminés sur la base d'une structure hiérarchique conceptuelle qui est une structure qui représente hiérarchiquement des concepts de mots ; et
une unité de classification (24) qui classifie les objets de manière à ce qu'ils soient associés aux mots-clés ordonnés et crée une table de classification d'objet bidimensionnelle dans laquelle des mots-clés sont agencés dans une direction de ligne et des contextes sont disposés dans une direction de colonne, et les objets correspondants aux éléments respectifs de la table de classification d'objet sont agencés, dans lequel le dispositif de classification d'objet (10) est adapté pour recevoir une condition de récupération d'un utilisateur et pour récupérer plusieurs objets de récupération sur la base de la condition de récupération d'entrée, dans lequel une plage (R) de la table de classification d'objet bidimensionnelle est identifiée sur la base de la condition d'extraction d'entrée, et les objets correspondant à la plage identifiée (R) sont sélectionnés en tant qu'objets de récupération, et
dans lequel l'unité d'ordonnancement de mots-clés (23) ordonne les mots-clés dans les hiérarchies respectives dans l'ordre à partir d'une hiérarchie la plus élevée de la structure hiérarchique conceptuelle dans laquelle les plusieurs mots sont agencés, sur la base de la structure hiérarchique conceptuelle dans laquelle un groupe de mots associé à chaque mot, en tant que concept subordonné du mot, est réagencé sur la base de la pertinence du groupe de mots par rapport à des mots pluriels agencé dans une hiérarchie qui en est supérieure à la hiérarchie du groupe de mots.

2. Dispositif de classification d'objet (10) selon la revendication 1,
dans lequel l'unité d'ordonnancement de mots clés (23) ordonne les plusieurs mots-clés de manière à correspondre à l'ordre d'agencement des plusieurs mots-clés dans la structure hiérarchique conceptuelle réagencée.

3. Dispositif de classification d'objet (10) selon l'une quelconque des revendications 1 ou 2,
dans lequel l'unité de détermination de mot-clé (22) détermine un mot-clé candidat ayant une fréquence d'apparition la plus élevée, en tant que mot-clé, parmi plusieurs mots-clés candidats qui sont des candidats des mots-clés pour les un ou plusieurs objets.

4. Dispositif de classification d'objet (10) selon la revendication 1,
dans lequel l'unité de détermination de mot-clé (22) détermine un mot-clé candidat le plus proche d'une position moyenne, en tant que mot-clé, parmi plusieurs mots candidats qui sont des candidats des mots-clés pour les un ou plusieurs objets, dans la structure hiérarchique conceptuelle réagencée sur la base des positions et de fréquences d'apparition des mots-clés candidats respectifs dans la structure hiérarchique conceptuelle dans laquelle les plusieurs mots-clés candidats sont réagencés.

5. Dispositif de classification d'objet (10) selon la revendication 1,
dans lequel l'unité de détermination de mot-clé (22) détermine un mot indiquant un concept superordonné commun de plusieurs mots-clés candidats, en tant que mot-clé, dans la structure hiérarchique conceptuelle réagencée, parmi les plusieurs mots-clés candidats qui sont des candidats des mots-clés pour les un ou plusieurs objets.

6. Dispositif de classification d'objet (10) selon l'une quelconque des revendications 1 à 5, comprenant en outre :
une unité d'affichage de table (25) qui affiche la table de classification d'objet bidimensionnelle dans laquelle les mots-clés ordonnés sont agencés dans l'une d'une rangée et d'une colonne d'une matrice et les objets classifiés de manière à être associés aux mots-clés sont agencées en éléments, sur une unité d'affichage.

7. Dispositif de classification d'objet (10) selon la revendication 6, comprenant en outre :
une unité de désignation de plage qui désigne une plage (R) comprenant un ou plusieurs objets dans la table de classification d'objet bidimensionnelle en réponse à une opération d'un utilisateur,
dans lequel l'unité de classification (24) classe des objets similaires à un objet inclus dans la plage dans l'un quelconque des mots-clés, et
l'unité d'affichage de table (25) affiche la table de classification d'objet bidimensionnelle dans laquelle l'objet inclus dans la plage (R) et des objets similaires qui sont similaires à l'objet inclus dans la plage (R) sont agencés en éléments, sur l'unité d'affichage (25).

8. Dispositif de classification d'objet (10) selon la revendication 7,
dans lequel l'unité de classification (24) ne classifie pas les objets similaires lorsque les mots-clés dans lesquels les objets similaires sont classés sont éloignés de la plage (R) d'un seuil ou plus.

9. Dispositif de classification d'objet (10) selon l'une quelconque des revendications 6 à 8,
dans lequel dans la table de classification d'objet bidimensionnelle, des contextes de l'objet sont agencés dans l'ordre basé sur la structure hiérarchique conceptuelle réagencée dans l'autre d'une rangée et d'une colonne de la matrice.

10. Programme amenant un ordinateur à fonctionner comme :
une unité de détermination de mot-clé (22) qui détermine des mots-clés pour un ou plusieurs objets ;
une unité d'ordonnancement de mots-clés (23) qui ordonne les plusieurs mots-clés déterminés sur la base d'une structure hiérarchique conceptuelle qui est une structure qui représente hiérarchiquement un concept de mots ; et
une unité de classification (24) qui classifie les objets de manière à ce qu'ils soient associés aux mots-clés ordonnés et crée une table de classification d'objet bidimensionnelle dans laquelle les mots-clés sont agencés dans une direction de ligne et des contextes sont agencés dans une direction de colonne, et les objets correspondants aux éléments respectifs de la table de classification d'objet sont agencés,
dans lequel le programme amène en outre l'ordinateur à recevoir une condition de récupération d'un utilisateur et à récupérer plusieurs objets de récupération sur la base de la condition d'extraction d'entrée, dans lequel une plage (R) des deux la table de classification d'objet dimensionnels est identifiée sur la base de la condition de récupération d'entrée, et les objets correspondant à la plage identifiée (R) sont sélectionnés en tant qu'objets de récupération, et
dans lequel l'unité d'ordonnancement de mots-clés (23) ordonne les mots-clés dans les hiérarchies respectives dans l'ordre à partir d'une hiérarchie la plus élevée de la structure hiérarchique conceptuelle dans laquelle les plusieurs mots sont agencés, sur la base de la structure hiérarchique conceptuelle dans laquelle un groupe de mots associé à chaque mot, en tant que concept subordonné du mot, est réagencé sur la base d'une pertinence du groupe de mots par rapport au plusieurs mots agencés dans une hiérarchie qui est supérieure à la hiérarchie du groupe de mots.
